# EUROPÄISCHE PATENTSCHRIFT

(11) **EP 1 871 626 B1**
(45) Veröffentlichungstag und Bekanntmachung des Hinweises auf die Patenterteilung: **24.02.2016**
(21) Anmeldenummer: 06723496.3
(22) Anmeldetag: 17.03.2006
(51) Int. Cl.: B60J 5/04, B60R 13/04

(54) **ABDECKUNG AN EINEM KRAFTFAHRZEUGAUSSENTEIL SOWIE ENTSPRECHENDES VERFAHREN ZUR HERSTELLUNG UND ENTSPRECHENDE VERWENDUNG**
COVERING ON AN OUTER PART OF A VEHICLE, RELATED PRODUCTION METHOD AND USE THEREOF
REVETEMENT SUR UNE PARTIE EXTERIEURE D'UN VEHICULE, PROCEDE DE PRODUCTION ASSOCIE ET SON UTILISATION

(30) Priorität: 12.04.2005 DE 102005017744
(43) Veröffentlichungstag der Anmeldung: 02.01.2008
(73) Patentinhaber: Süddeutsche Aluminium Manufaktur GmbH, 89558 Böhmenkirch (DE)
(72) Erfinder: BINDER, Hans, 89558 Böhmenkirch (DE); BINDER, Ottmar, 89558 Böhmenkirch (DE)
(74) Vertreter: Grosse, Rainer
(86) Internationale Anmeldenummer: PCT/EP2006/002452
(87) Internationale Veröffentlichungsnummer: WO 2006/125487

(56) Entgegenhaltungen:
- EP-A- 0 865 965
- DE-A1- 2 930 850
- DE-A1- 10 014 928
- DE-A1- 10 216 128
- US-A- 5 368 903
- US-A1- 2005 067 856

## Beschreibung

Die Erfindung betrifft eine Verwendung eines ein Abdeckteil bildenden Sichtteils eines Kraftfahrzeugaußenteils, insbesondere einer Kraftfahrzeugtür.

Es ist bekannt, an einem Kraftfahrzeugaußenteil, insbesondere einer Kraftfahrzeugtür, eine Abdeckung anzubringen, die im Falle der genannten Kraftfahrzeugtür im Bereich des unteren Randes der Tür angeordnet ist und sich über die gesamte Türbreite erstreckt. Das Abdeckteil ist leistenförmig gestaltet und liegt etwa in der Ebene der Außenseite der übrigen Kontur der Kraftfahrzeugtür. Bevorzugt weist die Kraftfahrzeugtür im Bereich der Abdeckung einen rückversetzten Blechverlauf auf, wobei die so gebildete, rückversetzte Zone der Aufnahme des Tragteils und des das Tragteil abdeckenden Abdeckteils dient. Das Abdeckteil ist als Kunststoffteil ausgebildet, dessen Außenseite in Wagenfarbe des Kraftfahrzeugs lackiert ist.

Aus der Figur 30 der US-A-5 368 903 geht ein Kraftfahrzeugaußenteil hervor, das mittels einer Rastverbindung an einer Halterung befestigt ist. Diese Halterung ist mit einem Befestigungsstift versehen, der an einer Lagerfläche eines Kraftfahrzeugs befestigt ist.

Der Erfindung liegt die Aufgabe zugrunde, eine Verwendung eines Abdeckteils anzugeben, wodurch ohne großen Aufwand unterschiedliche Designvarianten zu realisieren sind.

Diese Aufgabe wird erfindungsgemäß durch die Merkmale des Anspruches 1 gelost. Das ursprünglich als Abdeckmittel dienende und mittels des Tragteils an dem Kraftfahrzeugaußenteil gehaltene Abdeckteil wird erfindungsgemäß von dem Abdeckelement beziehungsweise Abdeckblech überfangen, das demgemäß ein von außen sichtbares, das Design bestimmendes Teil der Abdeckung bildet. Die Formgebung und die Oberflächenausbildung des Abdeckblechs bestimmen das Türdesign beziehungsweise das Design im Bereich der Abdeckung der Kraftfahrzeugtür, sodass das Abdeckblech entscheidend das Aussehen des Kraftfahrzeugaußenteils prägt. Da insoweit das vorhandene, durch die Überdeckung durch das Abdeckblech nicht mehr sichtbare Abdeckteil nunmehr erfindungsgemäß eine Tragfunktion für das Abdeckblech ausübt und insoweit keine Neu- oder Zusatzteile erforderlich sind, ist zum Beispiel auf sehr einfache Art und Weise eine fahrzeugbaureihen-spezifische Variation ermöglicht. Wenn im Zuge dieser Anmeldung von einem "Abdeckblech" gesprochen wird, kann es sich dabei jedoch auch stets um ein "Abdeckelement" handeln. Es ist vorgesehen, dass das Abdeckelement beziehungsweise Abdeckblech das Abdeckteil, das insoweit als Tragteil anzusehen ist, an mindestens einem Randbereich übergreift oder hintergreift und mit dem Abdeckteil über mindestens eine Klebeverbindung verklebt ist. Durch den Übergriff oder Hintergriff wird eine reproduzierbare und sichere Stellung des Abdeckblechs an dem Abdeckteil geschaffen. Das Abdeckteil bildet aufgrund des Überfangens von dem Abdeckblech ein inneres Abdeckteil, das bei einer Betrachtung der Außenseite der Tür nicht sichtbar ist. Das Abdeckteil ist bei fahrzeugbaureihenbedingter Nichtverwendung des Abdeckblechs ein Sichtteil. Hierdurch wird die der Erfindung zugrundeliegende Basisidee sichtbar, nämlich ein an und für sich für eine "normale" Baureihe verwendetes Abdeckteil als Halteteil zu verwenden, um -sofern zum Beispiel ein bestimmtes Design erzielt werden soll- hieran das Abdeckblech zu halten, sodass das Abdeckteil nunmehr nicht mehr sichtbar ist, sondern lediglich die Tragfunktion ausübt. Das Design wird vielmehr von dem Abdeckblech bestimmt.

Ferner ist es vorteilhaft, wenn das Abdeckblech ein Tiefziehteil ist. Das Abdeckblech kann insbesondere aus Aluminium oder Aluminiumliegierung, insbesondere eloxiertem Aluminium oder eloxierter Aluminiumlegierung, bestehen. Alternativ ist es auch möglich, dass das Abdeckblech aus Messing oder Messinglegierung besteht. Im Falle des aus Messing oder Messinglegierung bestehenden Abdeckblechs ist dieses vorzugsweise verchromt, sodass eine Abdeckung, insbesondere eine Türleiste, zur Verfügung steht, die verchromt ist.

Eine Weiterbildung der Erfindung sieht vor, dass das Abdeckblech eine Beschichtung, insbesondere eine keramische Beschichtung und/oder einer Lackierung, aufweist. Diese Beschichtung kann zusätzlich oder alternativ zu einem Eloxieren oder einem Verchromen vorgesehen sein.

Wie bereits erwähnt, kann das Abdeckblech als Abdeckleiste ausgebildet sein, die sich vorzugsweise über die Breite der Tür erstreckt und an der unteren Randzone der Tür von außen sichtbar angeordnet ist. Die untere Randkante der Abdeckung grenzt -bei geschlossener Tür- an den der Karosserie zugehörigen Türschweller des Kraftfahrzeugs an.

Die Klebeverbindung weist vorzugsweise mindestens ein Klebeband auf. Ein-doppelseitiges Klebeband ermöglicht eine sichere Befestigung des Abdeckblechs an dem inneren Abdeckteil. Insbesondere werden die zum Tragen der Masse des Abdeckbleches aufzubringenden Kräfte durch das Übergreifen oder Hintergreifen des Abdeckbleches am Abdeckteil aufgefangen, sodass derartige Kräfte von dem Klebeband nicht oder nur zu einem gewissen Prozentsatz aufgenommen werden müssen.

Die Klebeverbindung weist vorzugsweise ein Klebeformteil auf. Hierbei handelt es sich um "zwischengeschaltetes" Teil, das zwischen dem Abdeckblech und dem inneren Abdeckteil angeordnet ist und insbesondere formangepaßte Oberflächen schafft, um eine oder mehrere gut haltbare Klebeverbindungen zu erzielen.

Eine Weiterbildung der Erfindung sieht, vor, dass das Klebebauteil zwischen einer Außenfläche des Abdeckteils und einer Innenfläche des Abdeckblechs angeordnet und sowohl mit dem Abdeckteil als auch mit dem Abdeckblech verklebt ist.

Ferner ist von Vorteil, wenn das Klebeformteil zusätzlich oder alternativ zur Klebung mit dem Abdeckteil und/oder Tragteil verschraubt und/oder vernietet ist.

Eine Weiterbildung der Erfindung sieht vor, dass das Tragteil ein Grundteil und das Abdeckteil ein Aufsetzteil bildet. Bevorzugt sind Grundteil und Aufsetzteil mittels mindestens einer Rastverbindung lösbar aneinander gehalten. Bei der Montage der Abdeckung ist es daher, lediglich erforderlich, das Grundteil an der Tragstruktur des Kraftfahrzeugaußenteils, insbesondere der Kraftfahrzeugtür, zu befestigen und dann das bereits mit Abdeckblech versehene Abdeckteil beziehungsweise Aufsetzteil auf das Grundteil aufzurasten. Alternativ ist es auch möglich, dass zunächst das Aufsetzteil auf das Grundteil aufgerastet wird und anschließend das Abdeckblech an dem Abdeckteil befestigt wird.

Nach einer Weiterbildung der Erfindung ist vorgesehen, dass das Sichtteil beziehungsweise Abdeckteil durch Materialabtrag gebildete Anlagezonen beziehungsweise Haltezonen für das Abdeckblech aufweist. Bei dem Sichtteil handelt es sich um das im Falle der Verwendung eines Abdeckblechs nicht sichtbare Aufsetzteil, an dem das Abdeckblech befestigt wird. Um durch Aufsetzen des Abdeckblechs keine vergrößerten Außenkonturen der Abdeckung zu erhalten, wird das Aufsetzteil durch Materialabtrag entsprechend bearbeitet, um zumindest Platz für die Blechstärke/Materialstärke des Abdeckblechs/Abdeckelements zu schaffen.

Eine Weiterbildung der Erfindung sieht vor, dass das Abdeckblech für den Ober- oder Hintergriff mindestens eine Abbiegung beziehungsweise Umbiegung aufweist.

Die Zeichnung veranschaulicht die Erfindung anhand von Ausführungsbeispielen, und zwar zeigt:
- Figur 1: einen Querschnitt durch eine Abdeckung, die sich an einer Kraftfahrzeugtür befindet,
- Figur 2: ein weiteres Ausführungsbeispiel einer Abdeckung,
- Figur 3: ein weiteres Ausführungsbeispiel einer Abdeckung und
- Figur 4: ein letztes Ausführungsbeispiel einer Abdeckung.

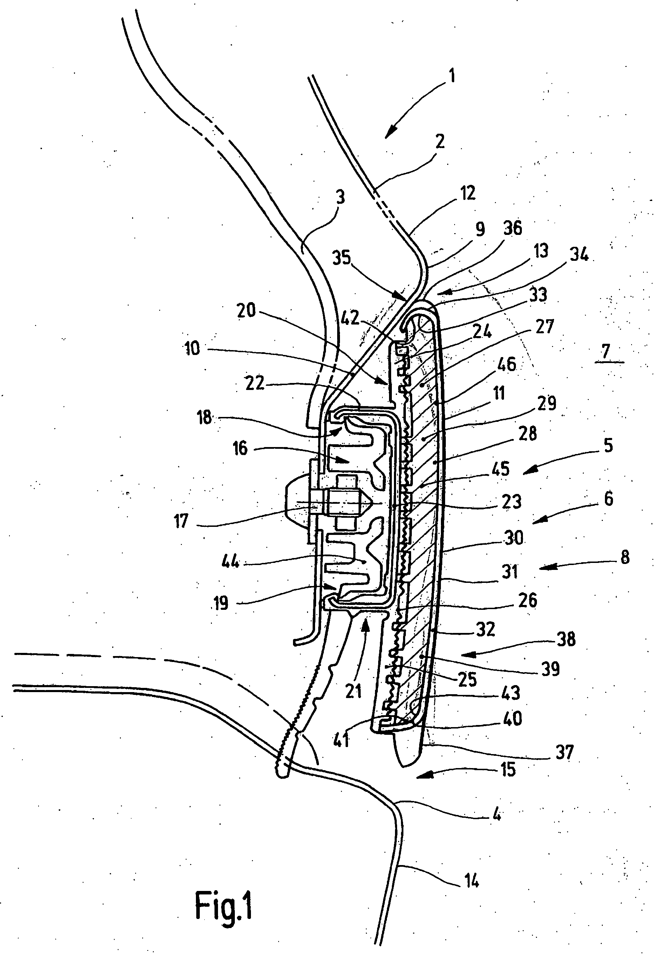

Die Figur 1 zeigt den unteren Bereich einer Kraftfahrzeugtür 1, die ein Außenblech 2 sowie eine innere Tragstruktur 3 oder dergleichen aufweist. Die Kraftfahrzeugtür 1 befindet sich im geschlossenen Zustand, sodass sie sich in unmittelbarer Nachbarschaft des zugehörigen, angedeuteten Türschwellers 4 befindet. Im unteren Randbereich 5 der Kraftfahrzeugtür 1 befindet sich eine Abdeckung 6, diebei Betrachtung des zugehörigen Fahrzeugs von außen (Bezugszeichen 7)- sichtbar ist und sich streifenförmig über die Breite der Kraftfahrzeugtür 1 erstreckt. Insofern bildet die Abdeckung 6 eine Abdeckleiste 8. Das Außenblech 2 der Kraftfahrzeugtür 1 weist im Bereich der Abdeckung 6 aufgrund eines bogenförmigen Verlaufs (Bogen 9) eine zurückgezogene, leistenförmige Zone 10 auf, in der die Abdeckung 6 angeordnet ist, wobei -gemäß Figur 1- die Außenseite 11 der Abdeckung 6 an die von außen sichtbare Außenseite 12 des Außenblechs 2 unter Ausbildung einer streifenförmigen Vertiefung 13 fluchtend anschließt und auch mit der Außenseite 14 des zur Karosserie des Kraftfahrzeugs gehörende Türschwellers 4 eine im Wesentlichen fluchtende Position unter Ausbildung eines Spalts 15 einnimmt.

Die Abdeckung 6 ist wie folgt aufgebaut: Sie besitzt ein Tragteil 16, das mit Hilfe von Befestigungselementen 17 an dem Außenblech 2 im Bereich der zurückgezogenen Zone 10 befestigt ist. Mittels zweier Rastverbindungen 18, 19 ist mit dem Tragteil 16 ein Abdeckteil 20 rastend verbunden. Das Abdeckteil 20 weist einen Abschnitt 21 in Form eines U-förmigen Profils 22 auf, das -im verrasteten Zustand-das Tragteil 16, das vorzugsweise leistenförmig ausgebildet ist und sich über die Türbreite erstreckt, übergreift und in dieser Stellung mittels der Rastverbindungen 18 und 19 lösbar gehalten ist. Ein Mittelsteg 23 des U-Pröfils 22 setzt sich -über das U-Profil 22 hinausragend- beidseitig von letzterem mit Haltestreifen 24 und 25 fort, sodass der Mittelsteg 23 zusammen mit den Haltestreifen 24 und 25 eine Halterung 26 für ein Abdeckflächenelement 27 des Abdeckteils 20 bilden, das -im Querschnitt gesehen- eine leicht konvex gebogene Außenfläche 28 aufweist. Bei bestimmten Fahrzeugtypen bildet die Außenfläche 28, die dann in Fahrzeugfarbe lackiert ist, eine sichtbare Außenfläche, das heißt, das Abdeckteil 20 bildet unter den genannten Voraussetzungen ein Sichtteil 29.

Soll eine Designvariation vorgenommen werden, so wird erfindungsgemäß wie folgt vorgegangen: Dem Abdeckteil 20 wird ein dieses überfangendes Abdeckelement 30 zugeordnet. Das Abdeckelement 30 ist bevorzugt als Abdeckblech 31 ausgebildet. Das Abdeckblech 31, das als eloxiertes Aluminiumblech 32 ausgebildet ist, überfängt einen Randbereich 33 des Abdeckteils 20 mit einer Abbiegung 34, sodass dort ein Hintergriff 35 geschaffen ist. Um Platz für die Blechstärke des Abdeckblechs 31 im Bereich der streifenförmigen Vertiefung 13 zum Außenblech 2 zu schaffen, wird das Abdeckteil 20 materialabtragend bearbeitet. Die ursprüngliche Ausgestaltung des Abdeckteils 20 wird durch die mit dem Bezugszeichen 36 und 37 versehenen Linien gekennzeichnet, das heißt, das Abdeckteil 20 wird hinsichtlich seiner Höhe verkleinert, sodass das Abdeckblech 31 Platz findet. Während im oberen Bereich 47 das Abdeckblech 31 mittels des erwähnten Hintergriffs 35 an dem Abdeckteil 20 gehalten ist, wird es insbesondere im unteren Bereich 38 mittels mindestens einer Klebeverbindung 39 gehalten. Auch im unteren Bereich 38 weist das Abdeckblechs 31 eine Umbiegung 40 auf, die die untere Randkante 41 des Abdeckteils 20. überfängt, wobei jedoch hier kein Hintergriff vorliegt.

Abdeckteil 20 und Halterung 26 sind insbesondere mittels Reibschweißung miteinander verbunden. Tragteil 16, U-Profil 22, Haltestreifen 24 und 25 sowie Abdeckteil 20 bestehen vorzugsweise aus Kunststoff, wobei für das Sichtteil 29, also das Abdeckflächenelement 27, hochwertiger Kunststoff eingesetzt wird, um eine glatte Außenfläche 28 zu schaffen, die -beim Nichteinsatz eines Abdeckblechs 31- lackiert wird. Wird jedoch ein Abdeckblech 31 eingesetzt, um ein besonderes Design zu schaffen, so ist es nicht erforderlich, dass die Außenfläche 28 lackiert wird. Vielmehr wird das unlackierte Rohteil verwendet, das dann mit dem Abdeckblech 31 versehen wird, indem es im Hintergriff 35 und mittels der Klebeverbindung 39 an dem Abdeckteil 20 befestigt wird. Im unteren Bereich 38 ist -gemäß Linie 37- angedeutet, dass auch hier das Abdeckteil 20 materialabtragend bearbeitet wurde, um eine neue Kontur zu schaffen, die vom Abdeckblech 31 überfangen wird. Der Materialabtrag erfolgt vorzugsweise durch Fräsung. Hierdurch werden Anlagezonen 42 und 43 für das Abdeckblech 31 geschaffen.

Bei der Montage wird zunächst das Tragteil 16 an der Kraftfahrzeugtür 1 befestigt. Das Tragteil 16 bildet somit ein Grundteil 44. Anschließend wird dann das mit Abdeckblech 31 versehene Abdeckteil 20 mittels des U-Profils 22 mit dem Grundteil 44 verrastet, sodass das Grundteil 44 mit einem Aufsetzteil 45 lösbar verbunden ist.

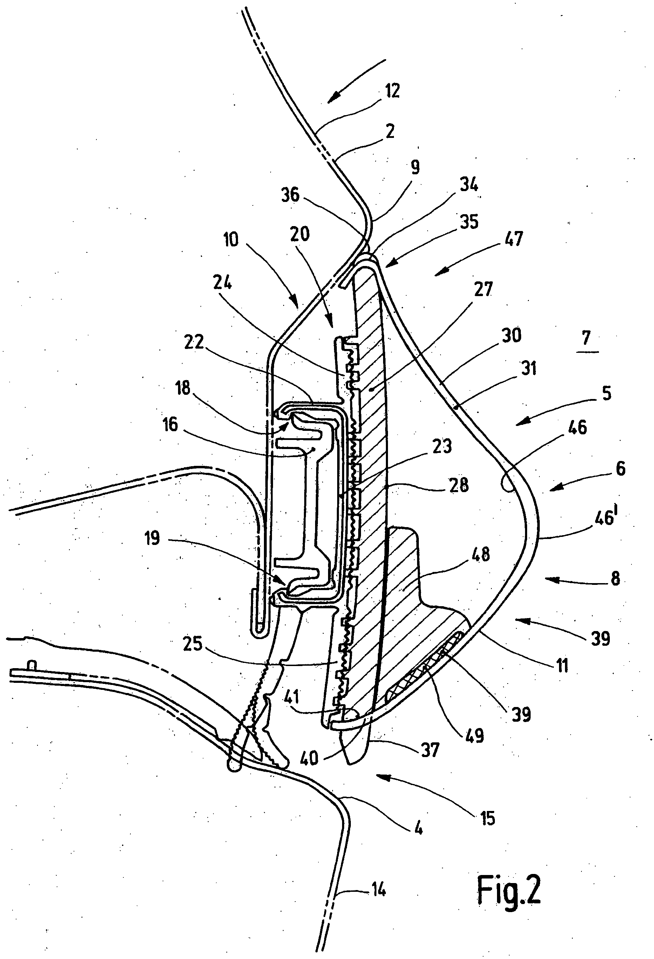

Die Figur 2 veranschaulicht ein weiteres Ausführungsbeispiel einer Abdeckung 6, die sich von dem Ausführungsbeispiel der Figur 1, nur dadurch unterscheidet, dass die Außenfläche 28 des Abdeckteils 20 nicht flächig auf der Innenseite 46 des Abdeckblechs 31 angeordnet ist, sondern dass das Abdeckblech 31 -im Querschnitt geseheneine bogenförmige Struktur aufweist, sodass ein Wulst 46' gebildet wird, wodurch ein besonderer Designeffekt erzielt wird. Zur Festlegung des Abdeckblechs 31 an dem Abdeckteil 20 ist im oberen Bereich 47 der bereits beim Ausführungsbeispiel der Figur 1 erwähnte Hintergriff 35 geschaffen. Im unteren Bereich 38 ist zwischen der Außenfläche 28 des Abdeckteils 20 und der Innenseite 46 des Abdeckblechs 31 ein als Formteil, insbesondere Formleiste, ausgebildetes Klebeformteil 48 angeordnet, das an der Außenfläche 28 des Abdeckteils 20 festgelegt ist und ferner mit der Innenseite 46 des Abdeckblechs 31 mittels einer Klebeverbindung 39 verklebt ist. Die Klebeverbindung 39 wird von einem doppelseitig klebenden Klebeband 49 vorgenommen. Die Verbindung zwischen dem Klebeformteil 48 und dem Abdeckteil 20 kann ebenfalls als Klebeverbindung 39 ausgebildet sein.

Ferner ist anzumerken, dass die Querschnittsstruktur des Abdeckblechs 31 über die Breite der Kraftfahrzeugtür 1 nicht gleich bleiben muss, sondern dass im Zuge des Verlaufs über die Türbreite oder Wulst 46' sich vergrößern oder verkleinern kann, sodass insgesamt eine entsprechende Profilierung erzeugt wird.

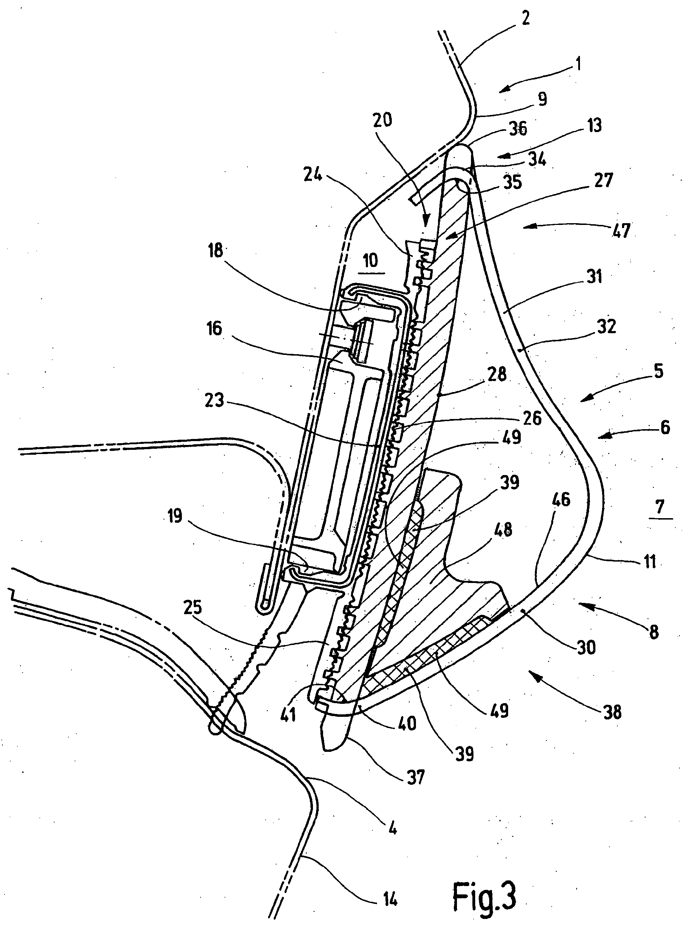

Das Ausführungsbeispiel der Figur 3 unterscheidet sich gegenüber den Ausführungsbeispielen der Figuren 1 und 2 lediglich dadurch, dass das Tragteil 16 anders ausgebildet ist, wobei es jedoch bei der Rastverbindung zwischen dem Tragteil 16 und dem U-Profil 22 des Abdeckteils 20 bleibt. Wie ersichtlich, ist das Klebeformteil 48 beim Ausführungsbeispiel der Figur 3 mit zwei beidseitig klebenden Klebebändern 49 versehen, wodurch es zum einen an der Außenfläche 28 des Abdeckteils 20 festgelegt wird und zum anderen mit der Innenseite 46 des Abdeckblechs 31 verbunden ist.

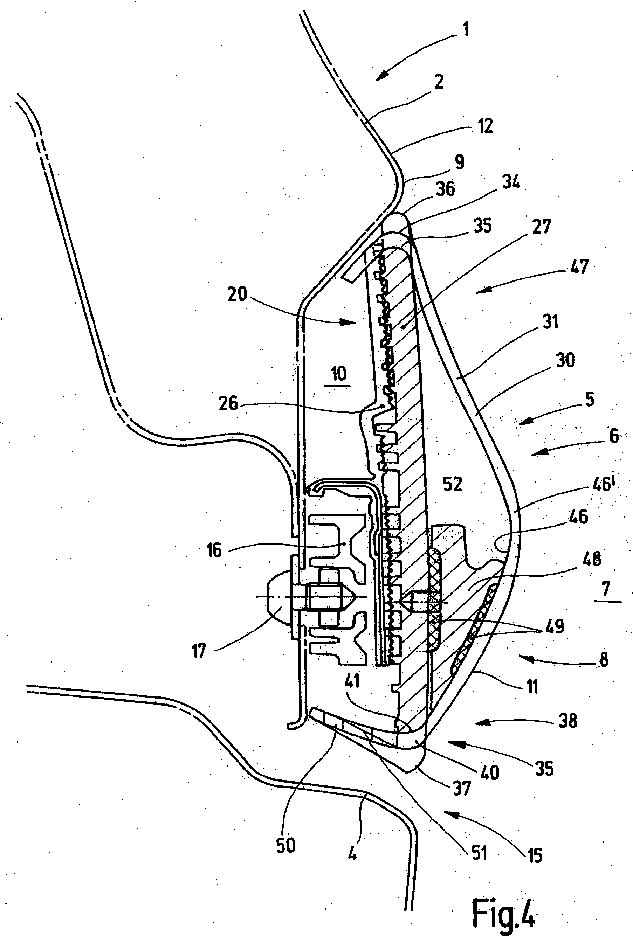

Das Ausführungsbeispiel der Figur 4 unterscheidet sich von den vorhergehenden Ausführungsbeispielen der Figuren 2 und 3 dadurch, dass der Wulst 46' weniger stark ausgebildet ist und dass die Umbiegung 40 derart stark erfolgt, dass auch im unteren Bereich 38 ein Hintergriff 35 zum Abdeckteil 20 erzeugt ist, wobei der durch die Umbiegung 40 ausgebildete Schenkel 50 des Abdeckblechs 31 eine im Wesentlichen geschlossene Struktur bildet, die mit mindestens einem Wasserablauf 51 versehen ist. Das Klebeformteil 48 weist wiederum zwei Klebebänder 49 auf, um zum einen die Verbindung zum Abdeckteil 20 und zum anderen die Verbindung zum Abdeckblech 31 im unteren Bereich 38 zu schaffen, wobei zusätzlich zum entsprechenden Klebeband 49 von außen nicht sichtbare Befestigungselemente 52 vorgesehen sind, um das Klebeformteil 48 am Abdeckteil 20 zu befestigen.

## Patentansprüche

1. Verwendung eines ein Abdeckteil (20) bildenden Sichtteils (29) eines Kraftfahrzeugaußenteils, insbesondere einer Kraftfahrzeugtür, bei fahrzeugbaureihenbedingter Nichtverwendung als nichtsichtbares Halteteil einer ein Abdeckelement (30), insbesondere Abdeckblech (31), aufweisenden sichtbaren Abdeckung, wobei das Abdeckteil (20) an einem Tragteil (16) mittels einer Rastverbindung (18,19) lösbar gehalten ist, und wobei das Abdeckelement (30) das Abdeckteil (20) an mindestens einem Randbereich (33) übergreift oder hintergreift und mit dem Abdeckteil (20) über mindestens eine Klebeverbindung (39) verklebt ist.

2. Verwendung nach Anspruch 1, **dadurch gekennzeichnet, dass** das Abdeckblech (31) ein Tiefziehteil ist.

3. Verwendung nach einem der vorhergehenden Ansprüche, **dadurch gekennzeichnet, dass** das Abdeckblech (31) aus Aluminium oder Aluminiumlegierung, insbesondere eloxiertem Aluminium oder eloxierter Aluminiumlegierung, besteht.

4. Verwendung nach einem der vorhergehenden Ansprüche, **dadurch gekennzeichnet, dass** das Abdeckblech (31) aus Messing oder Messinglegierung besteht.

5. Verwendung nach einem der vorhergehenden Ansprüche, **dadurch gekennzeichnet, dass** das aus Messing oder Messinglegierung bestehende Abdeckblech (31) verchromt ist.

6. Verwendung nach einem der vorhergehenden Ansprüche, **dadurch gekennzeichnet, dass** das Abdeckblech (31) eine Beschichtung, insbesondere eine keramische Beschichtung und/oder eine Lackierung, aufweist.

7. Verwendung nach einem der vorhergehenden Ansprüche, **dadurch gekennzeichnet, dass** das Abdeckblech (31) als Abdeckleiste (8) ausgebildet ist.

8. Verwendung nach einem der vorhergehenden Ansprüche, **dadurch gekennzeichnet, dass** die Klebeverbindung (39) mindestens ein Klebeband (49) aufweist.

9. Verwendung nach Anspruch 8, **dadurch gekennzeichnet, dass** das Klebeband (49) ein doppelseitig klebendes Klebeband (49) ist.

10. Verwendung nach einem der vorhergehenden Ansprüche, **dadurch gekennzeichnet, dass** die Klebeverbindung (39) ein Klebeformteil (48) aufweist.

11. Verwendung nach Anspruch 10, **dadurch gekennzeichnet, dass** das Klebeformteil (48) zwischen einer Außenfläche (28) des Abdeckteils (20) und einer Innenfläche (46) des Abdeckblechs (31) angeordnet und sowohl mit dem Abdeckteil (20) als auch mit dem Abdeckblech (31) verklebt ist.

12. Verwendung nach einem der Ansprüche 10 oder 11, **dadurch gekennzeichnet, dass** das Klebeformteil (48) zusätzlich oder alternativ zur Klebung mit dem Abdeckteil (20) und/oder Tragteil (16) verschraubt und/oder vernietet ist.

13. Verwendung nach einem der vorhergehenden Ansprüche, **dadurch gekennzeichnet, dass** das Sichtteil (29) beziehungsweise Abdeckteil (20) durch Materialabtrag gebildete Haltezonen beziehungsweise Anlagezonen (42,43) für das Abdeckblech (31) aufweist.

14. Verwendung nach einem der vorhergehenden Ansprüche, **dadurch gekennzeichnet, dass** das Abdeckblech (31) für den Über- oder Hintergriff (35) mindestens eine Abbiegung (34) beziehungsweise Umbiegung (40) aufweist.

## Claims

1. Use of a visible part (29) forming a cover part (20) of an exterior motor vehicle part, particularly a motor vehicle door, as a hidden retaining part of a visible cover comprising a cover element (30), particularly metal cover (31), due to the vehicle series design non-use, wherein the cover part (20) is detachably retained on a carrier part (16) by means of a detent connection (18, 19), and wherein the cover element (30) braces or locks the cover part (20) on at least one edge region (33) and is glued to the cover part (20) by means of at least one adhesive connection (39).

2. Use according to claim 1, **characterized in that** the metal cover (31) is a deep-drawn part.

3. Use according to any one of the preceding claims, **characterized in that** the metal cover (31) is made of aluminum or an aluminum alloy, particularly anodized aluminum or an anodized aluminum alloy.

4. Use according to any one of the preceding claims, **characterized in that** the metal cover (31) is made of brass or a brass alloy.

5. Use according to any one of the preceding claims, **characterized in that** the metal cover (31) made of brass or a brass alloy is chrome-plated.

6. Use according to any one of the preceding claims, **characterized in that** the metal cover (31) comprises a coating, particularly a ceramic coating and/or a paint coat.

7. Use according to any one of the preceding claims, **characterized in that** the metal cover (31) is configured as a cover strip (8).

8. Use according to any one of the preceding claims, **characterized in that** the adhesive connection (39) comprises at least one adhesive tape (49).

9. Use according claim 8, **characterized in that** the adhesive tape (49) is a double-sided adhesive tape (49).

10. Use according to any one of the preceding claims, **characterized in that** the adhesive connection (39) comprises an adhesive moulded part (48).

11. Use according claim 10, **characterized in that** the adhesive moulded part (48) is disposed between an outside surface (28) of the cover part (20) and an inside surface (46) of the metal cover (31) and is glued both to the cover part (20) and to the metal cover (31).

12. Use according to one of the claims 10 or 11, **characterized in that** the adhesive moulded part (48), in addition or alternatively to the bonded joint, is screwed and/or riveted to the cover part (20) and/or carrier part (16).

13. Use according to any one of the preceding claims, **characterized in that** the visible part (29) or cover part (20) comprises retaining zones or contact zones (42, 43) formed by material removal for the metal cover (31).

14. Use according to any one of the preceding claims, **characterized in that** the metal cover (31) comprises at least one downward bend (34) or lateral bend (40) for the bracing or locking configuration (35).

## Revendications

1. Utilisation d'une partie visible (29) d'une partie extérieure d'un véhicule, notamment d'une porte d'un véhicule, formant une partie de recouvrement (20), dans le cas où elle n'est pas utilisée dans la gamme des véhicules, en tant que partie de retenue invisible pour un recouvrement visible comprenant un élément de recouvrement (30), notamment une tôle de recouvrement (31), la partie de recouvrement (20) étant retenue de manière amovible sur une partie de support (16) au moyen d'un encliquetage (18, 19), et l'élément de recouvrement (30) chevauchant ou prenant par derrière la partie de recouvrement (20) à au moins une zone de bord (33), et étant collée à la partie de recouvrement (20) au moyen d'au moins une liaison adhésive (39).

2. Utilisation selon la revendication 1, **caractérisée en ce que** la tôle de recouvrement (31) est une pièce emboutie.

3. Utilisation selon l'une quelconque des revendications précédentes, **caractérisée en ce que** la tôle de recouvrement (31) consiste en aluminium ou un alliage d'aluminium, notamment en aluminium anodisé ou un alliage d'aluminium anodisé.

4. Utilisation selon l'une quelconque des revendications précédentes, **caractérisée en ce que** la tôle de recouvrement (31) consiste en laiton ou un alliage de laiton.

5. Utilisation selon l'une quelconque des revendications précédentes, **caractérisée en ce que** la tôle de recouvrement (31) consistant en laiton ou un alliage de laiton est chromée.

6. Utilisation selon l'une quelconque des revendications précédentes, **caractérisée en ce que** la tôle de recouvrement (31) présent un revêtement, notamment un revêtement céramique et/ou une couche de laque.

7. Utilisation selon l'une quelconque des revendications précédentes, **caractérisée en ce que** la tôle de recouvrement (31) est configurée en tant que profilé de recouvrement (8).

8. Utilisation selon l'une quelconque des revendications précédentes, **caractérisée en ce que** la liaison adhésive (39) présente au moins un ruban adhésif (49).

9. Utilisation selon la revendication 8, **caractérisée en ce que** le ruban adhésif (49) est un ruban adhésif à double face (49).

10. Utilisation selon l'une quelconque des revendications précédentes, **caractérisée en ce que** la liaison adhésive (39) présente une pièce moulée adhésive (48).

11. Utilisation selon la revendication 10, **caractérisée en ce que** la pièce moulée adhésive (48) est disposée entre une surface extérieure (28) de la partie de recouvrement (20) et une surface intérieure (46) de la tôle de recouvrement (31) et est collée à la partie de recouvrement (20) et à la tôle de recouvrement (31).

12. Utilisation selon l'une quelconque des revendications 10 ou 11, **caractérisée en ce que** la pièce moulée adhésive (48) est en alternative, ou en plus d'être collée, vissée et/ou rivetée avec la partie de recouvrement (20) et/ou la partie de support (16).

13. Utilisation selon l'une quelconque des revendications précédentes, **caractérisée en ce que** la partie visible (29) ou la partie de recouvrement (20) présente des zones de support ou des zones de butée (42, 43) pour la tôle de recouvrement (31), respectivement formées par enlèvement de matière.

14. Utilisation selon l'une quelconque des revendications précédentes, **caractérisée en ce que** la tôle de recouvrement (31) comprend au moins une courbure (34) ou un cintrage (40) pour la prise par derrière ou chevauchante (35).
